# EUROPÄISCHE PATENTSCHRIFT

(11) **EP 3 267 510 B1**
(45) Veröffentlichungstag und Bekanntmachung des Hinweises auf die Patenterteilung: **07.08.2019**
(21) Anmeldenummer: 17178712.0
(22) Anmeldetag: 29.06.2017
(51) Int. Cl.: H01M 2/10, H01M 10/625, H01M 10/6563, H01M 10/6557, H01M 10/6555, H01M 10/613

(54) **TRAKTIONSBATTERIE**
TRACTION BATTERY
BATTERIE DE PROPULSION

(30) Priorität: 07.07.2016 DE 102016008222; 04.04.2017 DE 102017107203
(43) Veröffentlichungstag der Anmeldung: 10.01.2018
(60) Teilanmeldung: 19183166.8
(73) Patentinhaber: HOPPECKE Batterien GmbH & Co. KG, 59929 Brilon (DE)
(72) Erfinder: Kesper, Dipl.-Ing. Heinrich, 34508 Willingen (DE)
(74) Vertreter: Rausch Wanischeck-Bergmann Brinkmann

(56) Entgegenhaltungen:
- EP-A1- 1 932 707
- DE-A1-102010 007 633
- DE-U- 7 539 826
- US-A1- 2001 030 069
- US-A1- 2006 091 856
- US-A1- 2014 338 999

## Beschreibung

Die Erfindung betrifft eine Traktionsbatterie mit mehreren miteinander verschalteten Batteriezellen, die jeweils in einem Zellengehäuse einander abwechselnd angeordnete positive und negative Elektrodenplatten aufweisen, und mit mehreren Batterietrögen, die jeweils der Aufnahme einer Mehrzahl von Batteriezellen dienen, wobei ein jeder Batterietrog elektrolytfest und -dicht ausgebildet ist, sowie mit einem die Batterietröge aufnehmenden Batteriekasten, wobei benachbarte Batterietröge unter Belassung eines Spaltraums beabstandet zueinander angeordnet sind.

Traktionsbatterien der vorbeschriebenen Art sind aus dem Stand der Technik an sich gut bekannt, weshalb es eines gesonderten druckschriftlichen Nachweises an dieser Stelle nicht bedarf. Eine gattungsgemäße Traktionsbatterie ist beispielsweise aus der EP 1 932 707 A1 bekannt.

Als nicht stationäre Batterien finden Traktionsbatterien typischerweise in der Fahrzeugtechnik Verwendung, beispielsweise bei Gabelstaplern, Hubwagen und/oder dgl. Vorbekannte Traktionsbatterien verfügen über eine Mehrzahl von miteinander elektrisch verschalteten Batteriezellen. Es kommen typischerweise je nach gewünschter Ausgangsspannung 12 Zellen (für 24 Volt), 24 Zellen (für 48 Volt) oder 40 Zellen (für 80 Volt) zum Einsatz. Dabei verfügt jede Batteriezelle über ein Zellgehäuse, das einerseits einen Elektrolyten sowie andererseits einander abwechselnd angeordnete positive und negative Elektrodenplatten aufnimmt.

Das Zellengehäuse einer Batteriezelle besteht typischerweise aus Kunststoff und es ist oberseitig mittels eines Deckels elektrolytdicht verschlossen, beispielsweise durch Verschweißen des Deckels mit dem Gehäuse.

Zur Aufnahme der Batteriezellen verfügt eine Traktionsbatterie über einen Batterietrog. Dieser ist zumeist deckellos nach Art eines Kastens ausgebildet und verfügt über einen Boden sowie vier daran angeordnete Seitenwände. Im gebrauchsfertigen Zustand der Traktionsbatterie nimmt der Batterietrog die Batteriezellen dicht gepackt auf. Dabei sind die Batteriezellen in Spalten und Reihen angeordnet, um den vom Batterietrog bereitgestellten Aufnahmeraum optimiert auszunutzen.

Der Batterietrog ist zumeist aus miteinander verschweißten Stahlblechen gebildet. Er stellt einen die Batteriezellen tragenden Boden sowie vier damit verschweißte Seitenwände bereit. Um etwaigen toleranzbedingten Ungenauigkeiten begegnen zu können, ist der vom Batterietrog bereitgestellte Aufnahmeraum in seinen lichten Innenabmessungen etwas größer ausgebildet als die Gesamtabmessungen der zu einem Zellenpaket dicht gepackten Batteriezellen. Es entsteht so ein umlaufender Ausgleichsspalt zwischen den Trogseitenwänden einerseits und den diesen nebengeordneten Batteriezellen des Batteriezellenpakets andererseits. In diesen Ausgleichsspalt werden nach einem Einsetzen der Batteriezellen in den Batterietrog Distanzplatten aus Kunststoff eingesetzt, womit der Ausgleichsspalt geschlossen und die Batteriezellen gegeneinander verspannt und gegenüber den Seitenwänden des Batterietrogs abgestützt sind. Die Dicke dieser Distanzplatten bestimmt sich je nach auszugleichendem Toleranzmaß.

Eine gattungsgemäße Traktionsbatterie ist aus der schon eingangs genannten EP 1 932 707 A1 bekannt. So offenbart die EP 1 932 707 A1 ein in einem Gehäuse angeordnetes Batteriepack. Dieses verfügt über eine Mehrzahl von in Reihe hintereinander angeordneten Batteriemodulen, die zwischen zwei Endplatten zu einem Stack miteinander verspannt sind. Dabei sind benachbarte Batteriemodule beabstandet zueinander angeordnet, was dadurch erreicht ist, dass ein jedes Batteriemodul über ein Gehäuse verfügt, das gehäuseaußenseitig über Abstandshalter in Form von Rippen verfügt. Ein jedes Batteriemodul beherbergt jeweils eine Mehrzahl von Batteriezellen, die in Gehäuselängsrichtung nebeneinander angeordnet sind.

Aus dem Stand der Technik ist gemäß der US 2001/0030069 A1 des Weiteren eine Batterie für ein Kraftfahrzeug bekannt, das mehrere zu einem Stack miteinander verspannte Batteriezellen aufweist. Dabei sind benachbarte Batteriezellen beabstandet zueinander angeordnet, zu welchem Zweck die Zellengehäuse jeweils Abstandshalter in Form von Rippen tragen. Die miteinander zu einem Stack verbundenen Batteriezellen sind in einem Batteriegehäuse angeordnet, das eine Zuführöffnung sowie eine Abführöffnung für Kühlluft aufweist.

Aus der US 2006/0091856 A1 ist ein Batteriemodul bekannt, das über in einem Gehäuse angeordnete Batteriezellen verfügt, wobei benachbarte Batteriezellen unter Belassung von Kanälen beabstandet zueinander angeordnet sind.

Die DE 10 2010 007 633 A1 betrifft ein Fahrzeug mit einer elektrischen Antriebsvorrichtung und einer in einem Gehäuse angeordneten Energiespeichervorrichtung. Dabei ist die Energiespeichervorrichtung aus mehreren Zellen gebildet und das Gehäuse umfasst mehrere Trenneinrichtungen, so dass zwischen zwei Zellen mindestens eine Trenneinrichtung positioniert ist.

Aus der DE 75 39 826 U ist ein Trog für eine Traktionsbatterie bekannt, welcher Trog Seitenwände und versteifte Rippenbleche aufweist. Dabei sind der Boden des Trogs und die Rippenbleche einstückig aus einem Blech gebildet, welches parallel und mit gleichem Abstand zueinander rechtwinklig zur Grundfläche hochstehende Stege aufweist.

Die US 2014/0338999 A1 offenbart eine Batterie-Anordnung für ein Elektrofahrzeug, die in einem Gehäuse angeordnet ist, das zur Führung von Kühlluft über Luftverteilkanäle verfügt. Dabei weist die Batterie-Anordnung mehrere benachbarte Batteriezellen auf, die zwecks Hindurchführung von Kühlluft beabstandet zueinander angeordnet sind.

Traktionsbatterien der vorbeschriebenen Art haben sich im alltäglichen Praxiseinsatz bewährt. Es besteht gleichwohl das Bestreben einer Verbesserung, um insbesondere den Anwendungsbereich zu erweitern. Es ist deshalb die **Aufgabe** der Erfindung, eine neuartige Traktionsbatterie bereitzustellen, die einen erweiterten Anwendungsbereich ermöglicht.

Zur **Lösung** dieser Aufgabe wird mit der Erfindung vorgeschlagen eine Traktionsbatterie der eingangs genannten Art, die sich dadurch auszeichnet, dass ein Batterietrog als U-Profil ausgebildet ist, wobei das U-Profil stirnseitig verschlossen ist, wobei der stirnseitige Verschluss durch gegenüberliegende Seitenwände des Batteriekastens gebildet ist.

In Abkehr zur bisherigen Bauform nach dem Stand der Technik sieht die erfindungsgemäße Ausgestaltung nicht mehr nur einen Batterietrog vor, der sämtliche Batteriezellen der Traktionsbatterie dicht gepackt aufnimmt. Es sind vielmehr eine Mehrzahl von Batterietrögen vorgesehen, die im endmontierten Zustand von einem gemeinsamen Batteriekasten aufgenommen sind. Dabei sind benachbarte Batterietröge beabstandet zueinander angeordnet, und zwar unter Belassung eines Spaltraums, der zumindest zweiseitig offen ausgebildet ist.

Jeder der Batterietröge nimmt eine Reihe von hintereinander angeordneten Batteriezellen auf, so dass die erfindungsgemäße Ausgestaltung bedingt, dass die Batteriezellen zumindest hinsichtlich zweier Seiten luftumspült sind.

Ein Batterietrog ist erfindungsgemäß als U-Profil ausgebildet, das stirnseitig verschlossen ist, und zwar einendseitig wie anderendseitig. Dabei stellt ein Batterietrog eine solche Innenabmessung bereit, dass Batteriezellen zu Reihen angeordnet hintereinander aufgenommen werden können, d.h. die Schenkel des den Batterietrog bildenden U-Profils weisen einen solchen Abstand voneinander auf, wie er durch die Breite eines Zellengehäuses vorgegeben ist. Die Länge des Batterietroges bestimmt sich indes anhand der Anzahl der hintereinander anzuordnenden Batteriezellen.

Erfindungsgemäß ist vorgesehen, dass der stirnseitige Verschluss eines einen Batterietrog bildenden U-Profils durch gegenüberliegende Seitenwände des Batteriekastens gebildet ist. Diese Konstruktion erweist sich als besonders einfach, da es zum Verschluss eines U-Profils keiner separaten Wände bedarf. Es ist vielmehr vorgesehen, dass der Batteriekasten mit seinen Seitenwänden die Batterietröge verschließt, was dadurch erreicht ist, dass die Batterietröge mit ihren Stirnseiten innenseitig der zugehörigen Seitenwand des Batteriekastens anliegen.

Die aufgrund der erfindungsgemäßen Ausgestaltung vorgesehenen Spalträume ermöglichen im bestimmungsgemäßen Anwendungsfall einen Wärmeabtransport durch Luftzirkulation. Damit kann die Betriebstemperatur im Vergleich zu herkömmlich kompakter Zellenpackung auf einem niedrigen Niveau gehalten werden. Dies wiederum gestattet es, die Traktionsbatterie nach der Erfindung ohne signifikante Einbußen hinsichtlich der Lebensdauer auch für Hochstromanwendungen einzusetzen. Dank der erfindungsgemäßen Ausgestaltung ist mithin der Anwendungsbereich erweitert.

"Hochstromanwendung" im Sinne der Erfindung meint dabei die Aufnahme und/oder Abgabe hoher Ströme innerhalb kurzer Zeitspannen, sei es im Entladefall durch den Betrieb von beispielsweise Drehstrommotoren oder im Beladefall durch den Einsatz von z.B. modernen Lademanagementsystemen und/oder Energierückgewinnungseinrichtungen (Rekupertation). Die Aufnahme und/oder die Abgabe hoher Ströme führt mit zunehmender Größe der einzelnen Batteriezellen zu stärker ins Gewicht fallenden und nicht vermeidbaren unerwünschten Nebeneffekten, wie zum Beispiel der Wärmeentwicklung aufgrund des mit steigender Zellengröße anwachsenden Innenwiderstands. In nachteiliger Weise führt dies im Verwendungsfall zu einer verkürzten Lebensdauer sowie zu kürzeren Entladezyklen. Damit sind aus dem Stand der Technik vorbekannte Traktionsbatterien ab einer bestimmten Baugröße für Hochstromanwendungen nicht oder nur bedingt geeignet, was insbesondere für Traktionsbatterien der Baugröße gilt, die im Markt wegen der gewünschten hohen Kapazität gefordert werden. Es stehen somit die einander widerstreitenden Anforderungen gegenüber, eine Batterie zu schaffen, die bei gleichzeitiger Langlebigkeit entweder eine hohe Kapazität bereitstellt oder für Hochstromanwendungen geeignet ist. Gattungsgemäße Batterien werden dieser Anforderung dem Grunde nach nicht gerecht.

Untersuchungen der Anmelderin haben gezeigt, dass sich vorbekannte Traktionsbatterien im Falle der Hochstromanwendung je nach Baugröße und damit einhergehendem Innenwiderstand auf 60°C und mehr insbesondere beim Beladen aufheizen können. Typischerweise sind vorbekannte Traktionsbatterien aber nur für ein durchschnittliches Temperaturniveau von z.B. 30°C ausgelegt. Im Ergebnis führt deshalb die Hochstromanwendung aufgrund der damit einhergehenden Temperaturbelastung zu einer erheblichen Verkürzung der Batterielebensdauer.

Zum Zwecke der Batterieschonung ist nach erfolgter Aufheizung infolge einer Hochstromanwendung durch beispielsweise einen Beladevorgang verwenderseitig vor Beginn einer weiteren Hochstromanwendung eine Abkühlphase vorzusehen. Eine solche Abkühlphase kann aber je nach Baugröße und erreichtem Temperaturniveau mehrere Tage in Anspruch nehmen, was nicht nur betriebswirtschaftlich von erheblichem Nachteil ist, es müssen auch Ausfall- und Umrüstzeiten berücksichtigt und durch redundante Einrichtungen kompensiert werden.

Die erfindungsgemäße Ausgestaltung überwindet die vorbeschriebenen Nachteile und ermöglicht auch ohne signifikante Verkürzung der Gesamtlebensdauer eine Anwendung im Hochstrombereich.

Nach der erfindungsgemäßen Ausgestaltung sind die Batteriezellen benachbarter Reihen unter Belassung eines Spaltraums voneinander beabstandet angeordnet. Dabei ist je Zellenreihe ein separater Batterietrog vorgesehen. Bei einer Traktionsbatterie mit z.B. vierzig Batteriezellen ergibt sich demnach, dass die Traktionsbatterie über insgesamt acht Batterietröge verfügt, wobei jeder Batterietrog fünf Batteriezellen aufnimmt.

Aufgrund der beabstandeten Anordnung der Batterietröge ist ein Belüftungssystem geschaffen, was eine Kühlung durch Luftzirkulation gestattet. Zum einen kann so das im Anwendungsfall erreichte Temperaturniveau gesenkt werden, zum anderen ist es aber vor allem möglich, eine gegenüber dem Stand der Technik deutlich verkürzte Abkühlung zu ermöglichen, die nicht unter Umständen Tage, sondern nur wenige Stunden beträgt. Dieser Vorteil kommt insbesondere nach einem bestimmungsgemäßen Beladen einer Traktionsbatterie zum Tragen. Zum einen deshalb, weil die Abkühlzeit nach einem bestimmungsgemäßen Beladevorgang deutlich reduziert ist, zum anderen aber auch deshalb, weil die Traktionsbatterie nach der Erfindung in standardmäßige, herkömmliche Be- und Entladezyklen integriert werden kann, ohne dass die Gefahr einer dauerhaften Überhitzung besteht, so dass sich eine deutlich erhöhte Lebensdauer einstellt.

Ein Weiteres kommt hinzu: Innerhalb der Spalträume zwischen zwei benachbarten Batterietrögen wirkt im Anwendungsfall der sogenannte Kamineffekt. Infolge der Zellenaufheizung erwärmt sich auch die Umgebungsluft der Batterietröge, die alsdann aufströmt und nach oben aus dem oben offenen Batteriekasten entweicht. Kühle Luft kann alsdann insbesondere von unten in die Spalträume nachströmen. Es wird so der vorbeschriebene Kühleffekt noch weiter verstärkt.

Um den vorbeschriebenen Kamineffekt noch zu verbessern, wird mit einem weiteren Merkmal der Erfindung vorgeschlagen, dass die untere Abschlusskante der vom Batteriekasten aufgenommenen Batterietröge in Höhenrichtung oberhalb der unteren Abschlusskante des Batteriekastens ausgebildet ist. Es wird auf diese Weise ein unterhalb der Batterietröge ausgebildeter Volumenraum geschaffen, der in strömungstechnischer Verbindung mit den zwischen den Batterietrögen ausgebildeten Spalträumen steht. Über diesen Volumenraum kann im Abkühlfall frische Kühlluft von außen nachgefördert und in die Spalträume zwischen den einzelnen Batterietrögen eingefördert werden.

Die Batterietröge nach der Erfindung sind elektrolytfest und -dicht ausgebildet. "Elektrolytfest" meint im Sinne der Erfindung, dass die innere Oberfläche der Batterietröge gegen die chemische Wirkung der von den Batteriezellen beherbergten Elektrolyten widerstandsfähig ist. "Elektrolytdicht" im Sinne der Erfindung meint, dass Elektrolyt im Fall eines Auslaufens aus einem defekten Batteriezellengehäuse vom Batterietrog sicher zurückgehalten wird, mithin nicht in die Umgebung der Traktionsbatterie gelangen kann, vorausgesetzt natürlich, die Traktionsbatterie ist in bestimmungsgemäßer Weise ausgerichtet und wird nicht beispielsweise unsachgerecht gekippt oder gar auf den Kopf gestellt.

Mit der erfindungsgemäßen Ausgestaltung wird der synergetische Effekt erreicht, dass einerseits eine Luftzirkulation einschließlich Kamineffekt zwischen benachbarten Batteriezellen gestattet ist, andererseits aber auch Auslaufschutz für unter Umständen aus einer Batteriezelle austretenden Elektrolyt erreicht ist. Erfindungsgemäß wird dieser synergetische Effekt dadurch erreicht, dass je Zellenreihe ein separater Batterietrog vorgesehen ist, der elektrolytfest und -dicht ausgebildet ist. Mehrerer solcher mit Batteriezellen jeweils bestückter Tröge sind benachbart zueinander angeordnet, und zwar unter Belassung eines Spaltraums, wodurch das Belüftungssystem geschaffen ist. Zur lagesicheren Anordnung dieser Batterietröge ist ein gemeinsamer Batteriekasten vorgesehen, der die einzelnen Batterietröge aufnimmt. Dabei ist vorgesehen, dass die untere Abschlusskante der Batterietröge in Höhenrichtung oberhalb der unteren Abschlusskante des Batteriekasten angeordnet ist, so dass sich in schon vorbeschriebener Weise unterhalb der Batterietröge ein Volumenraum ausbildet, der einen Zustrom von Kaltluft ermöglicht, der dann in die strömungstechnisch mit dem Volumenraum verbundenen Spalträume zwischen den Batterietrögen einströmen kann.

Der Batterietrog gattungsgemäßer Traktionsbatterien ist hinsichtlich seiner geometrischen Abmessungen standardisiert ausgebildet. Dies deshalb, damit sichergestellt ist, dass der die Batteriezellen aufnehmende Batterietrog in die dafür vorgesehenen Aufnahmeräume von Batterie zu betreibenden Einrichtungen, wie insbesondere Fahrzeugen bestimmungsgemäß hinein passt. Der nach der erfindungsgemäßen Ausgestaltung vorgesehene Batteriekasten weist diese vorbekannten Standardabmessungen eines Batterietroges einer vorbekannten Traktionsbatterie auf. Damit ist sichergestellt, dass auch die Traktionsbatterie nach der Erfindung in die dafür vorgesehen Aufnahmeräume von insbesondere Fahrzeugen in bestimmungsgemäßer Weise eingebracht werden kann.

Um trotz unveränderter Außenabmessungen der Traktionsbatterie die in vorbeschriebener Weise vorgesehenen Spalträume zwischen benachbarten Batterietrögen zu ermöglichen, wird mit der erfindungsgemäßen Ausgestaltung vorgeschlagen, dass die eingesetzten Batteriezellen je Batteriezelle ein Elektrodenplattenpaar weniger aufweisen, als die nach dem Stand der Technik typischerweise zum Einsatz kommenden Batteriezellen. So finden nach dem Stand der Technik typischerweise sogenannte 8 HPzS-Zellen Verwendung, was bedeutet, dass 8 positive Elektrodenplatten und 9 negative Elektrodenplatten pro Batteriezelle vorgesehen sind. Nach der Erfindung kommen im Unterschied zum vorbeschriebenen Stand der Technik 7 HPzS-Batteriezellen zum Einsatz, mithin Batteriezellen, die nur über 7 positive und 8 negative Elektrodenplatten verfügen. Damit werden in Breitenrichtung der Traktionsbatterien je Batteriezelle zwei Elektrodenplatten, .d.h. ein Elektrodenplattenpaar eingespart. Durch diese Einsparung wird bei gleichbleibenden Außenabmessungen der Traktionsbatterie der Raum geschaffen, den es bedarf, um die vorbeschriebenen Spalträume zwischen benachbarten Batterietrögen auszubilden.

Die Reduzierung der Plattenpaare geht mit einer Verringerung der Batteriekapazität einher. Dies wiederum bedingt, dass sich die Stromentlademenge, mithin letztendlich die Entnahmezeit verringert. Dieser Nachteil wird bewusst in Kauf genommen, da es bei der praktischen Anwendung nicht nur auf die Entladezeit, sondern auf den sich aus Entladezeit und Beladezeit zusammensetzenden Gesamtzyklus ankommt. Da die nach der Erfindung vorgesehenen Spalträume insbesondere im Nachgang einer Beladung eine deutlich schnellere Abkühlung der Traktionsbatterie gestatten, ergibt sich bei einer Gesamtbetrachtung, dass der Gesamtzyklus insgesamt optimiert und zugunsten des Verwenders deutlich effektiver gestaltet ist. So haben Untersuchungen der Anmelderin gezeigt, dass die Verringerung der Elektrodenplattenanzahl dazu führt, dass sich die Entladezeit im durchschnittlichen Mittel um 15 Min. verkürzt, die Abkühlzeit nach erfolgter Beladung sich indes um ca. 11 Stunden verkürzt, womit sich bei einer Betrachtung des Gesamtzyklus zugunsten des Anwenders einer Ersparnis von mehr als 10 Stunden ergibt.

Das heißt, die erfindungsgemäße Konstruktion sorgt insbesondere dafür, dass sich Umrüstzeiten wesentlich verringern, was auch den Vorteil mit sich bringt, dass weniger redundante Einrichtungen vorzuhalten sind.

Die Temperaturentwicklung im Stromentnahmefall ergibt sich insbesondere in Abhängigkeit des elektrischen Widerstandes der Traktionsbatterie. Es wird deshalb mit der Erfindung vorgeschlagen, den elektrischen Innenwiderstand der Traktionsbatterie dadurch zu reduzieren, dass die stromableitenden Komponenten, d.h. die Zellenpole mit Blick auf einen verminderten Innenwiderstand optimiert ausgelegt sind. Dies wird insbesondere dadurch erreicht, dass sie in ihren geometrischen Abmessungen im Unterschied zum Stand der Technik sehr viel kleiner ausgeführt werden. Durch diese Maßnahme wird eine verringerte Temperaturentwicklung erreicht, was zumindest teilweise die verringerte Kapazität durch die verringerte Anzahl an Elektrodenplatten ausgleicht. Insgesamt wird somit ein optimiertes System einer Traktionsbatterie bereitgestellt, die für Hochstromanwendungen in optimierter Weise geeignet ist.

Der Batteriekasten der Traktionsbatterie ist gemäß einem weiteren Merkmal der Erfindung deckel- und bodenfrei nach Art eines Rahmens ausgebildet. Dieser Rahmen nimmt in schon vorbeschriebener Weise die Batterietröge der Traktionsbatterie auf, und zwar derart, dass sie unter Belassung eines Spaltraums benachbart zueinander angeordnet und dabei lagefixiert sind. Dabei bestimmen die äußeren Abmessungen des Batteriekastens die Einbaugröße der Traktionsbatterie.

Sowohl die Batterietröge als auch der Batteriekasten sind aus Metall gebildet, was es gestattet, Batterietröge und Batteriekasten miteinander zu verschweißen. Es wird so ein stirnseitig dichter Verschluss der Batterietröge sichergestellt, womit die Elektrolytdichtheit gegeben ist.

Die Verwendung von Metall als Material sowohl für die Batterietröge als auch für den Batteriekasten ist aus einem weiteren Grund von Vorteil. So dient Metall als Material als optimierter Wärmeleiter, was insbesondere zu Abkühlzwecken von Vorteil ist. Denn an den Metallwänden vorbeiströmende Kühlluft führt zu einer flächenhaften Abkühlung der überströmten Metalloberflächen, so dass ein optimierter Wärmeentzug gewährleistet ist, was wiederum zu einer optimierten Abkühlung der von den Batterietrögen aufgenommenen Batteriezellen führt.

Gemäß einem weiteren Merkmal der Erfindung ist vorgesehen, dass nicht nur benachbarte Batterietröge voneinander beabstandet angeordnet sind, auch die zu einer Seitenwand des Batteriekastens benachbarten Batterietröge sind zur jeweils zugeordneten Seitenwand beabstandet angeordnet. Damit ist ein entsprechender Spaltraum auch zwischen einem Batterietrog und der dazu beabstandeten Seitenwand des Batteriekastens ausgebildet. Gemäß dieser Konstruktionsatternative werden mithin sämtliche vom Batteriekasten aufgenommene Batterietröge hinsichtlich zweier ihrer Seiten von Luft umspült.

Gemäß einem weiteren Merkmal der Erfindung ist vorgesehen, dass zwischen benachbarten Batterietrögen im jeweiligen Spaltraum ein Abstandshalter angeordnet ist. Die Batterietröge stützen sich mithin über einen gemeinsamen Abstandshalter gegenüber einander ab. Dies führt zu einer insgesamt steifen und wenig verwindungsfreundlichen Ausgestaltung der Gesamtanordnung der Traktionsbatterie. Derartige Abstandshaiter sind bevorzugterweise auch zwischen den zu einer Seitenwand des Batteriekastens benachbarten Batterietrögen und der jeweils zugehörigen Seitenwand des Batteriekastens angeordnet. Dabei wirken die Abstandshalter nicht nur als Versteifungsmittel.

Gemäß einem besonderen Vorschlag der Erfindung, der für sich selbst schutzfähig ist, ist vorgesehen, dass die Traktionsbatterie ein Zwangsströmungssystem für ein Kühlmedium aufweist.

Im Sinne der vorliegenden Erfindung bedeutet dies, dass nicht eine einfach aufgrund der thermischen Bedingungen in den Spalträumen bewirkte Luftströmung erzeugt wird, also eine reine Konvektionsströmung sondern es wird eine Zwangsströmung durch Ventilatoren, Pumpen oder dergleichen erzeugt, so dass das jeweilige Kühlmedium, beispielsweise Luft durch die Spalträume gedrückt oder gesaugt wird.

Kühlmedien können auch andere als Luft sein, und sie können gasförmig oder flüssig sein. Sie können im Rahmen der Erfindung aus vortemperiert sein, um gezielte und steuerbare Abkühlzyklen durchführen zu können.

Das in der Traktionsbatterie vorgesehene Zwangsströmungssystem kann Mittel zur Erzeugung der Zwangsströmung umfassen oder Schnittstellen zu solchen aufweisen.

So können direkt im Bereich der Spalträume Ventilatoren angeordnet sein. Auch können mehrere Spalträume strömungstechnisch miteinander verbunden sein, so dass an einer geeigneten Stelle Ventilatoren oder Pumpen angeordnet sein können.

Gemäß einem besonders vorteilhaften Vorschlag der Erfindung ist bodenseitig eine Bodenspaltraum ausgebildet. Zu diesem Zweck wird der Batteriekasten mit einem doppelten Boden versehen, welcher gegenüber den zwischen den Batterietrögen ausgebildeten Spalträumen strömungstechnisch verbunden ist. Somit kann er gemäß der Erfindung als Verteilerspaltraum zur Verteilung des Kühlmediums über sämtliche Spalträume dienen.

Gemäß einem weiteren vorteilhaften Vorschlag der Erfindung weist der Bodenspaltraum oder auch ein anderer Verteilerspaltraum in Strömungsiängsrichtung unterschiedliche Strömungsquerschnitte auf. Somit kann beispielsweise sichergestellt werden, dass alle mit dem jeweiligen Spaltraum verbundenen sonstigen Spalträume gleichmäßig mit Kühlmedium beaufschlagt werden.

Sofern einer der Spalträume mit einer Schnittstelle zum Anschluss einer externen Strömungsquelle versehen ist, so wird gemäß der Erfindung vorgeschlagen, dass diese schlitzförmig ausgebildet wird.

In diesem Fall umfasst das Gesamtsystem eine extern an den Batteriekasten von außen anzuschließende Strömungsquelle, beispielsweise einen Ventilator.

Alternativ oder auch zusätzlich können innerhalb des Batteriekastens an verschiedenen geeigneten Stellen Ventilatoren angeordnet sein.

Aufgrund der beabstandeten Anordnung der Batterietröge ist ein Belüftungssystem geschaffen, was eine Kühlung beispielsweise durch Luftzirkulation gestattet. Zum einen kann so das im Anwendungsfall erreichte Temperaturniveau gesenkt werden, zum anderen ist es aber vor allem möglich, eine gegenüber dem Stand der Technik deutlich verkürzte Abkühlung zu ermöglichen, die nicht unter Umständen Tage, sondern nur wenige Stunden beträgt. Dieser Vorteil kommt insbesondere nach einem bestimmungsgemäßen Beladen einer Traktionsbatterie zum Tragen. Zum einen deshalb, weil die Abkühlzeit nach einem bestimmungsgemäßen Beladevorgang deutlich reduziert ist, zum anderen aber auch deshalb, weil die Traktionsbatterie nach der Erfindung in standardmäßige, herkömmliche Be- und Entladezyklen integriert werden kann, ohne dass die Gefahr einer dauerhaften Überhitzung besteht, so dass sich eine deutlich erhöhte Lebensdauer einstellt.

Weitere Merkmale und Vorteile der Erfindung ergeben sich aus der nachfolgenden Beschreibung anhand der Figuren. Dabei zeigen
- Fig. 1: in schematisch perspektivischer Ansicht eine erfindungsgemäße Traktionsbatterie;
- Fig. 2: in einer Detailansicht die Traktionsbatterie nach Fig. 1;
- Fig. 3: in einer weiteren Detailansicht die erfindungsgemäße Traktionsbatterie nach Fig. 1;
- Fig. 4: in einer weiteren perspektivischen Darstellung die erfindungsgemäße Traktionsbatterie;
- Fig. 5: ein Diagramm über das Abkühlverhalten einer erfindungsgemäßen Traktionsbatterie;
- Fig. 6: in schematischer Ansicht eine Traktionsbatterie nach dem Stand der Technik; und
- Fig. 7: in einer Draufsicht von oben eine Traktionsbatterie nach dem Stand der Technik gemäß Fig. 6.
- Fig. 8: eine perspektivische Darstellung eines Ausführungsbeispieles für einen Batteriekasten nach der Erfindung;
- Fig. 9: eine perspektivische Frontansicht des Batteriekastens gemäß Fig. 8;
- Fig. 10: eine teilgeschnittene Darstellung des in Fign. 8 und 9 gezeigten Batteriekastens und
- Fig. 11: eine perspektivische Darstellung eines externen Ventilators,
- Fig. 12: ein Diagramm über das Abkühlverhalten einer erfindungsgemäßen Traktionsbatterie.

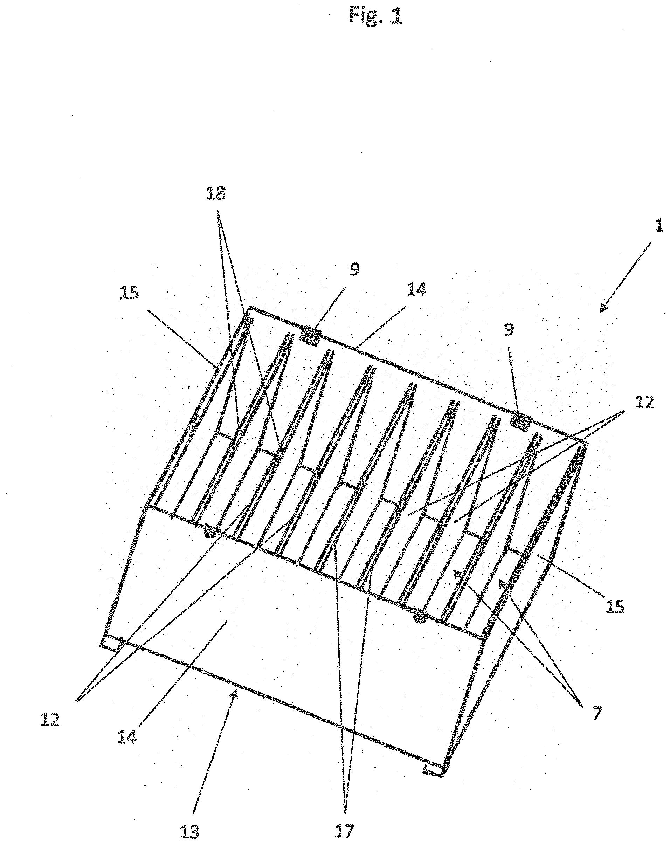

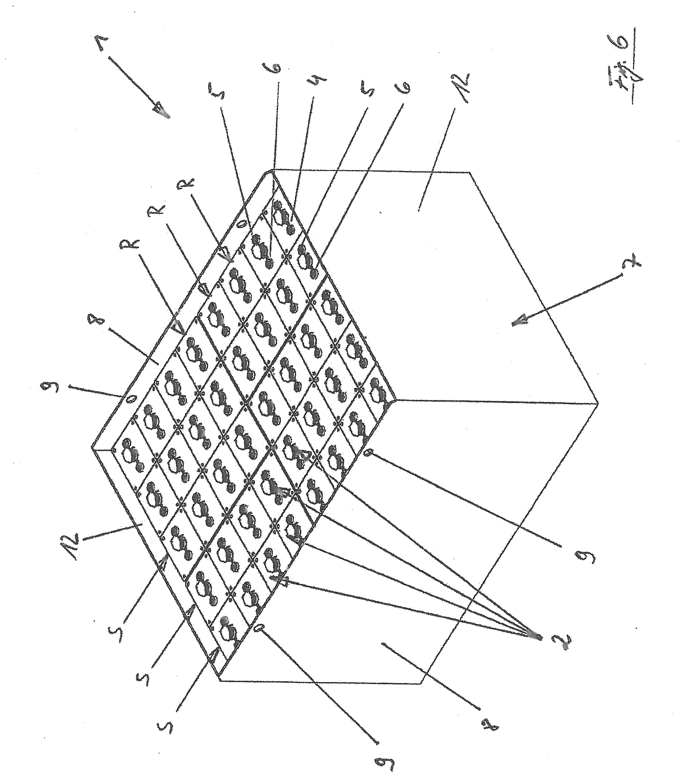

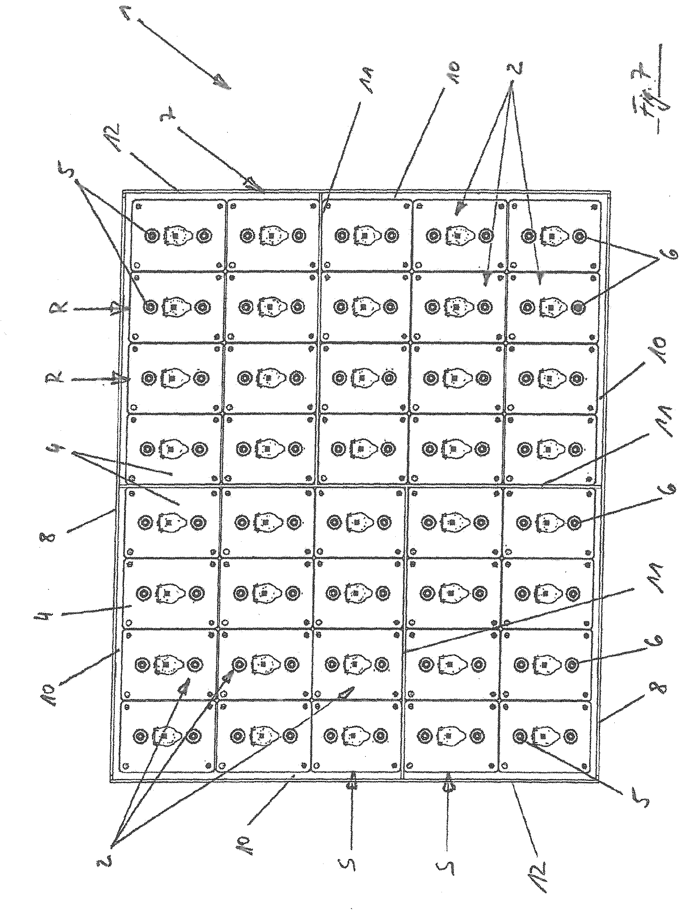

Die Figuren 6 und 7 zeigen eine Traktionsbatterie nach dem Stand der Technik. Eine erfindungsgemäße Traktionsbatterie 1 zeigen die Figuren 1 bis 4.

Eine Traktionsbatterie 1 nach dem Stand der Technik verfügt gemäß Fig. 6 über einen Batterietrog 7. Dieser ist gehäuseartig nach Art eines Kastens ausgebildet und verfügt über vier Seitenwände 8 bzw. 12 sowie über einen in Fig. 6 nicht näher erkennbaren geschlossenen Boden. Für eine Handhabung der Traktionsbatterie 1 beispielsweise mittels einer Hebevorrichtung weisen die Seitenwände 8 an ihrer oberen Randkante jeweils Ausnehmungen 9 auf, in die beispielsweise Hebehaken eingeklinkt werden können.

Der Batterietrog 7 dient der Aufnahme einer Mehrzahl von Batteriezellen 2, die dicht gepackt innerhalb des Batterietroges 7 angeordnet und zu Reihen R und Spalten S gruppiert sind.

Eine jede Batteriezelle 2 verfügt in an sich bekannter Weise über in den Figuren nicht näher dargestellte positive und negative Elektrodenplatten, die einander abwechselnd innerhalb eines nicht näher dargestellten Zellengehäuses angeordnet sind. Das Zellengehäuse nimmt zudem einen in die Elektrodenplatten im endmontierten Zustand umspülenden Elektrolyten auf. Oberseitig ist ein jedes Zellengehäuse mittels eines Zellendeckels 4 elektrolytdicht verschlossen, beispielsweise verschweißt.

Die Zellendeckel 4 sind jeweils von einem Minus-Pol 6 und einem Plus-Pol 5 durchführt. Im endmontierten Zustand sind die Batteriezellen 2 über ihre Pole 5 und 6 elektrisch miteinander verschaltet, welche Verschaltung der besseren Übersicht wegen in den Figuren nicht näher dargestellt ist.

Zur Aussteifung des Batterietroges 7 können Zwischenwände 11 vorgesehen sein, wie sich dies insbesondere aus der Darstellung nach Fig. 7 ergibt.

Fig. 7 lässt ferner erkennen, dass die Batteriezellen 2 dicht gepackt sind und aneinander anliegen. Der vom Batterietrog 7 bereitgestellte Aufnahmeraum wird so optimiert ausgenutzt.

Zwischen den Seitenwänden 8 bzw. 12 und den benachbart zu den Seitenwänden 8 bzw. 12 vorgesehenen Batteriezellen 2 ist ein insgesamt umlaufender Ausgleichsspalt 10 vorgesehen, wie dies ebenfalls Fig. 7 am deutlichsten erkennen lässt. Dieser Ausgleichsspalt 10 dient dem Toleranzausgleich und stellt sicher, dass auch bei maximal möglicher Toleranzabweichung die Innenabmessungen des Batterietrogs 7 mindestens so groß sind, dass die für den Batterietrog 7 vorgesehene Anzahl von Batteriezellen 2 vom Batterietrog 7 auch tatsächlich aufgenommen werden kann. Für eine lagesichere Packung der Batteriezellen 2 werden in den Ausgleichsspalt 10 nach Einbringen der Batteriezellen 2 Distanzplatten aus Kunststoff eingesteckt. Der Ausgleichsspalt 10 wird mithin verschlossen und die Batteriezellen 2 stützen sich im endmontierten Zustand unter Zwischenordnung der Ausgleichsplatten an den jeweils zugehörigen Seitenwänden 8 bzw. 12 des Batterietrogs 7 ab. Der besseren Übersicht wegen sind diese Ausgleichs-bzw. Distanzplatten in den Figuren nicht näher dargestellt.

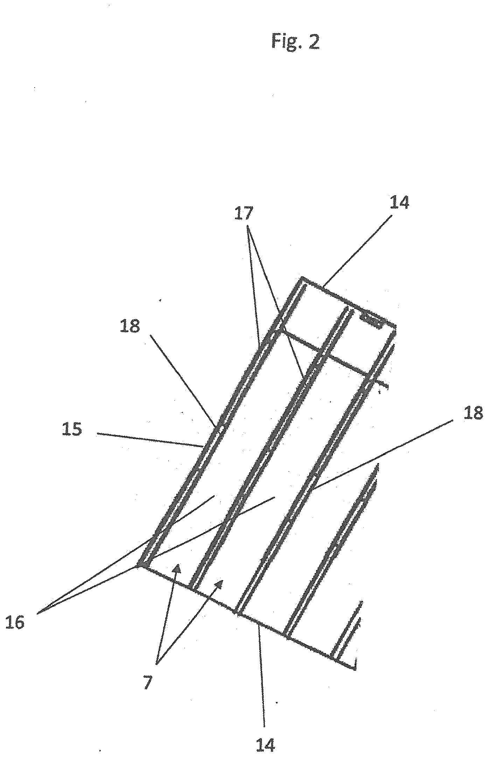

Eine erfindungsgemäße Traktionsbatterie 1 ist in den Figuren 1 und 2 dargestellt, wobei der besseren Übersicht wegen Batteriezellen 2 nicht gezeigt sind.

Es kommen gemäß der erfindungsgemäßen Ausgestaltung mehrere Batterietröge 7 zum Einsatz, wobei ein jeder Batterietrog 7 zur Aufnahme einer Reihe von Batteriezellen 2 dient. Ein jeder der Batterietröge 7 ist elektrolytfest und elektrolytdicht ausgebildet.

Die erfindungsgemäße Traktionsbatterie 1 verfügt des Weiteren über einen Batteriekasten 13. Dieser Batteriekasten 13 nimmt die einzelnen Batterietröge 7 auf, wobei benachbarte Batterietröge 7 unter Belassung eines Spaltraums 17 beabstandet zueinander angeordnet sind.

Wie sich insbesondere aus der Detaildarstellung nach Fig. 2 ergibt, verfügt der Batteriekasten 13 über erste Seitenwände 14 sowie über zweite Seitenwände 15. Dabei verlaufen die Seitenwände 15 des Batteriekastens 13 in Längsrichtung der Batterietröge 7.

Die zu den Seitenwänden 15 des Batteriekastens 13 benachbarten Batterietröge 7 sind unter Belassung eines Spaltraums 17 benachbart zu den Seitenwänden 15 angeordnet. Damit ergibt sich, dass ein jeder Batterietrog 7 hinsichtlich seiner beiden großen Seitenwände 12 luftumspült ist.

Zur Aussteifung der Gesamtkonstruktion ist vorgesehen, dass die Spalträume 17 sowohl zwischen zwei benachbarten Batterietrögen 7 als auch zwischen einem Batterietrog und einer hierzu benachbarten Seitenwand 15 des Batteriekastens 13 einen Abstandshalter 18 beherbergen. Sowohl die Batterietröge 7 als auch der Batteriekasten 13 sind aus Metall gebildet und miteinander verschweißt. Auch die Abstandshalter 18 bestehen vorzugsweise aus Metall und sind mit den Batterietrögen 7 bzw. den zugehörigen Seitenwänden 15 des Batteriekastens 13 verschweißt.

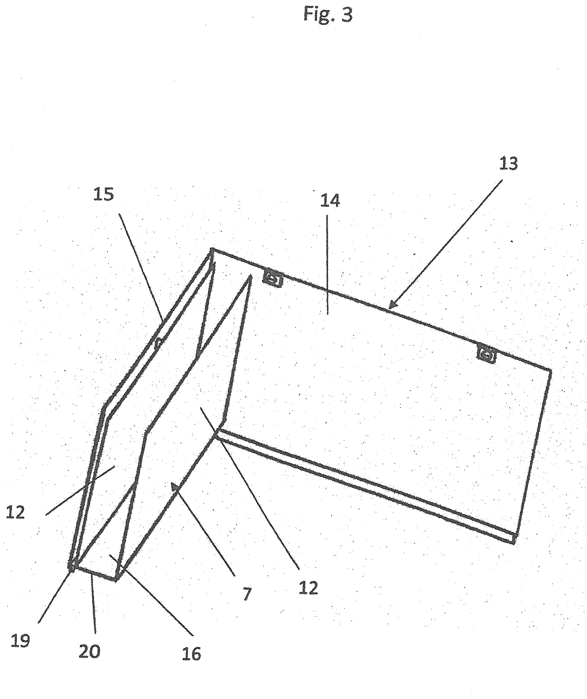

Wie sich insbesondere aus der Darstellung nach Fig. 3 ergibt, ist ein Batterietrog 7 als stirnseitig verschlossenes U-Profil ausgebildet. Dabei erfolgt ein Verschluss der Stirnseiten durch die jeder Stirnseite zugeordnete Seitenwand 14 des Batteriekastens 13. Hierdurch wird eine besonders einfache Konstruktion bereitgestellt, da es zum stirnseitigen Verschluss der U-Profile keiner zusätzlichen Bauteile bedarf.

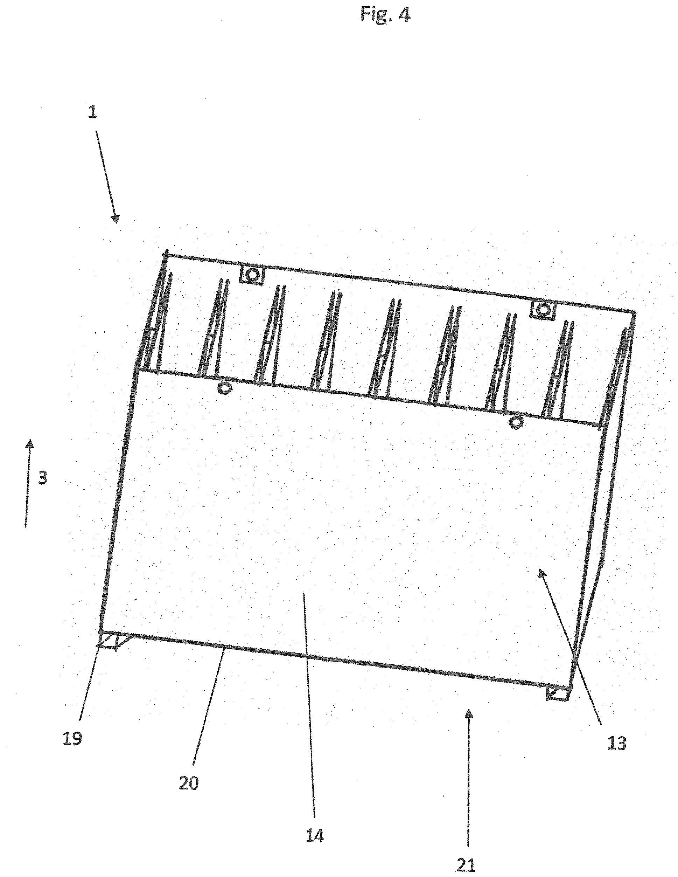

Insbesondere Fig. 4 ist noch zu entnehmen, dass die untere Abschlusskante 19 des Batteriekastens 13 in Höhenrichtung 3 unterhalb der unteren Abschlusskanten 20 der Batterietröge 7 angeordnet ist. Hierdurch wird ein Volumenraum unterhalb der Batterietröge 7 geschaffen, der über die stirnseitig der Batterietröge 7 vorgesehenen Spalt 21 zugänglich ist. Der Volumenraum steht wiederum seinerseits strömungstechnisch mit den Spalträumen 17 in Verbindung, so dass im bestimmungsgemäßen Anwendungsfall eine Luftzirkulation durch die Spalte 21 in durch in den Volumenraum und von dort aus durch die Spalträume 17 in Höhenrichtung 3 nach oben gestattet ist. Hierdurch wird eine effektive Abkühlung der die Batterietröge 7 begrenzenden Seitenwände 12 erreicht, was zu einer effektiven Temperaturabfuhr und damit Abkühlung der von den Batterietrögen 7 aufgenommenen Batteriezellen 2 führt.

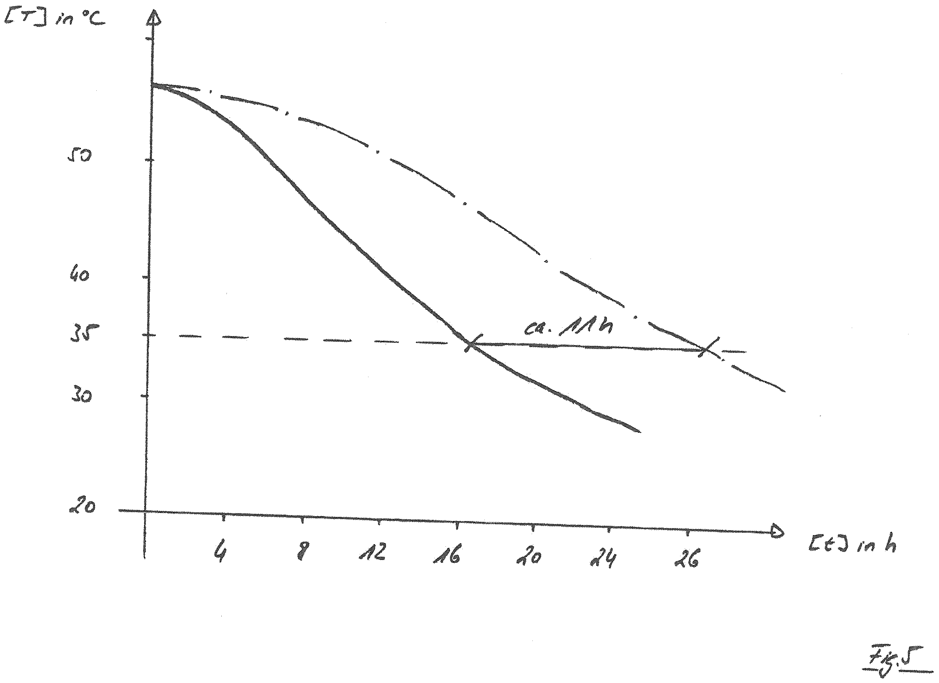

Fig. 5 lässt anhand eines Diagramms das Abkühlverhalten einer Traktionsbatterie 1 nach dem Stand der Technik gemäß der Strichpunktlinie und einer erfindungsgemäßen Traktionsbatterie 1 gemäß der durchgezogenen Linie erkennen. In dem Diagramm ist die Temperatur über die Zeit in Stunden zur Abkühlung aufgetragen. Wie sich aus dem Diagramm ergibt, benötigt eine Traktionsbatterie 1, die infolge eines vorangegangenen Aufladevorgangs auf z.B. 57°C aufgeheizt ist, eine bestimmte Abkühlzeit, um auf eine Anwendungstemperatur von ca. 35°C abzukühlen. Eine Traktionsbatterie nach dem Stand der Technik benötigt eine Abkühlzeit von ca. 27 Stunden, wohingegen eine Traktionsbatterie nach der erfindungsgemäßen Ausgestaltung bereits nach ca. 16 Stunden abgekühlt ist, womit sich eine Zeitersparnis zugunsten der erfindungsgemäßen Ausgestaltung von ca. 11 Stunden ergibt.

Der Batteriekasten 13 nach der erfindungsgemäßen Ausgestaltung verfügt bevorzugterweise über genormte Standardabmessungen in den Höhen-, Breiten- und Längsrichtungen. Damit ist gewährleistet, dass die erfindungsgemäße Traktionsbatterie in der Norm entsprechenden Aufnahmeräumen von z.B. Elektrofahrzeugen, Lademanagementsystemen und dgl. untergebracht werden kann.

Um einerseits einen Batteriekasten 13 mit der Norm entsprechenden Abmessungen bereitzustellen, der andererseits genügend Raum zur Ausbildung sowohl der Spalträume 17 zwischen den Batterietrögen 7 als auch des Volumenraums unterhalb der Batterietröge 7 bereitstellt, sind mit der erfindungsgemäßen Ausgestaltung folgende Maßnahmen ergriffen. Die mit Bezug auf eine bestimmte Standardnormgröße des Batteriekastens 13 zum Einsatz kommenden Batteriezellen 2 werden in Breitenrichtung verkleinert ausgeführt, in den im Vergleich zur maximalen Bepackung Batteriezellen 2 verwendet werden, die ein Elektrodenplattenpaar weniger aufweisen. Auf diese Weise wird in Breitenrichtung des Batteriekastens 13 hinreichend Platz geschaffen, um die vorbeschriebenen Spalträume 17 zwischen benachbarten Batterietrögen 7 einerseits bzw. Batterietrögen 7 und benachbarten Seitenwänden 15 des Batteriekastens 13 auszubilden. Mit dieser konstruktiven Maßnahme wird bewusst der Nachteil einer verringerten Batteriegesamtkapazität im Vergleich zu einer bei gegebener Troggröße nach dem Stand der Technik maximal möglichen Batteriekapazität in Kauf genommen. Dieser bewusst in Kauf genommene Nachteil wird jedoch durch die aufgrund der mit der erfindungsgemäßen Ausgestaltung möglichen Abkühlung einhergehenden schnelleren Wiedereinsetzbarkeit mehr als aufgewogen. Denn insbesondere die Regenerationszeit nach einem Beladevorgang ist aufgrund der mit der erfindungsgemäßen Ausgestaltung einhergehenden Abkühlung sehr viel kürzer als bei Traktionsbatterien nach dem Stand der Technik, wie dies vorstehend schon anhand von Fig. 5 beschrieben worden ist.

Zur Einhaltung der Normgröße des Batteriekastens 13 in Höhenrichtung 3 werden die Batteriezellen 2 in Höhenrichtung im Vergleich zum Stand der Technik verkürzt ausgeführt. Dies wird dadurch erreicht, dass das oberhalb der Elektrodenplatten zur Verfügung stehende Zusatzvolumen für Elektrolytflüssigkeit kleiner ausgeführt wird, was im Ergebnis eine Verringerung der Bauhöhe der Batteriezellen mit sich bringt. Die Verkleinerung des Zusatzvolumens für Elektrolytflüssigkeit bringt zwar den Nachteil mit sich, dass sich die Wartungsintervalle verkürzen, doch wird auch dieser Nachteil bewusst in Kauf genommen, zumal im Stand der Technik Elektrolytnachfülleinrichtungen bekannt sind, die im automatischen Betrieb arbeiten, so dass Wartungsarbeiten bei Verwendung solcher Systeme ohnehin entfallen. Die Reduzierung der Bauhöhe der Batteriezellen 2 bringt jedenfalls den Vorteil mit sich, dass der Batteriekasten 13 so ausgebildet werden kann, dass unterhalb der Batterietröge 7 ein Volumenraum entsteht. Dieser Volumenraum dient der Verteilung von außen zugeführter Frischluft auf die einzelnen Spaltraume 17 zwischen den Batterietrögen 7 bzw. zwischen den Batterietrögen 7 und benachbarten Seitenwänden 15 des Batteriekastens 13.

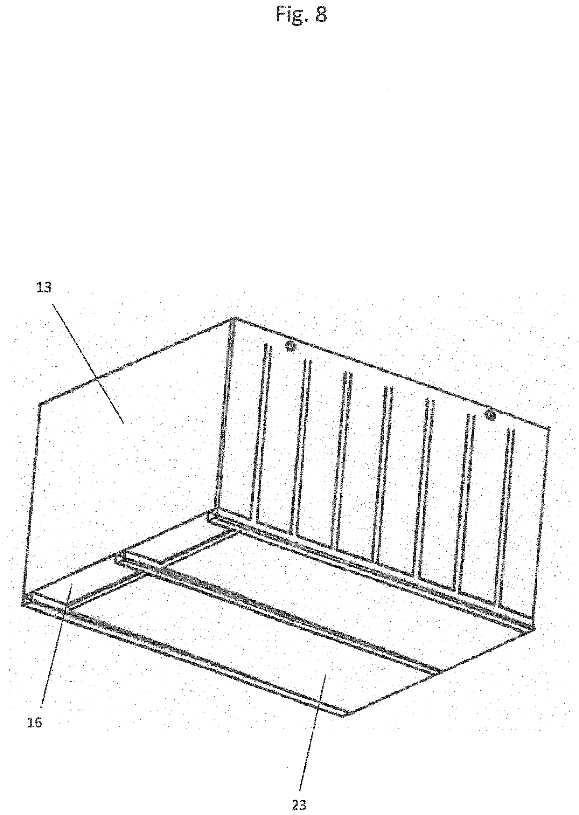

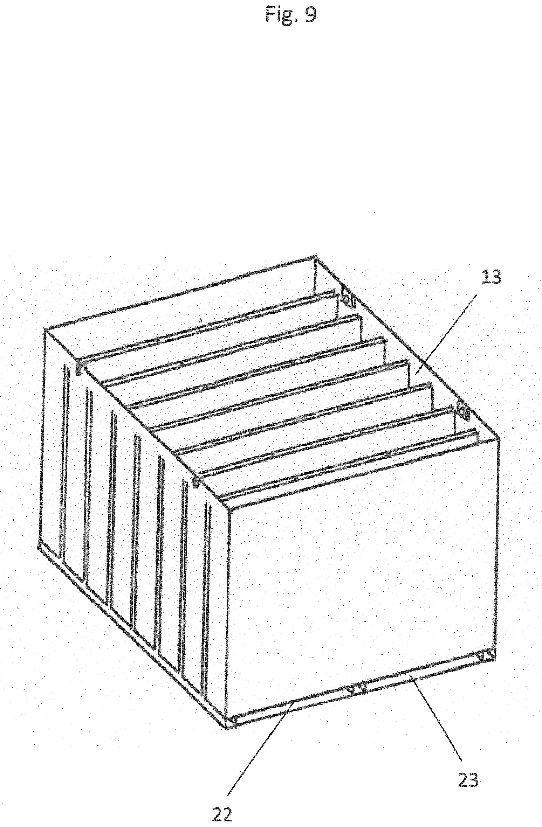

Die Fign. 8 bis 10 zeigen eine erfindungsgemäße Ausgestaltungsform, bei welcher der Batteriekasten 13 im Bereich des Bodenteils 16 mit einem bodenseitigen Spaltraum 22 versehen ist. Zu diesem Zweck ist er nochmals von unten abgedeckt, so dass sich der Spaltraum 22, insbesondere in Fig. 9 gut zu sehen, herausbildet.

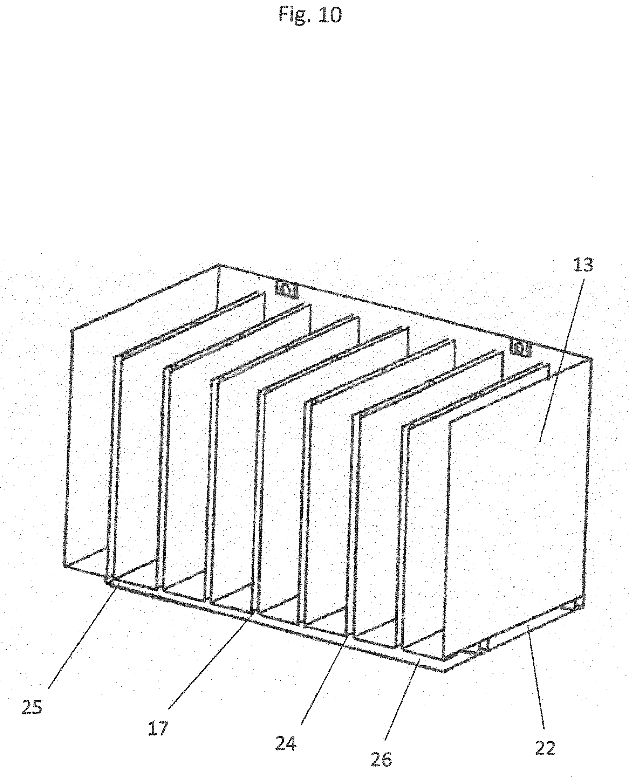

Der Spaltraum 22 ist, wie Fig. 10 zeigt, mit den Spalträumen 17 zwischen den Batteriezellen strömungstechnisch verbunden. Das heißt, der Spaltraum 22 ist gegenüber dem Spaltraum 17 im Bereich 24 offen. Insofern dient der Spaltraum 22 als Verteilerspaltraum für sämtliche Spalträume 17. Wie im gezeigten Ausführungsbespiel zu sehen ist, ist der Spaltraum 22 am Ende 25 mit einem schmaleren Strömungsquerschnitt versehen als am Eintrittsende 26. Somit wird gewährleistet, dass alle Spalträume 17 weitgehend gleichmäßig mit Kühlmedium beaufschlagt werden.

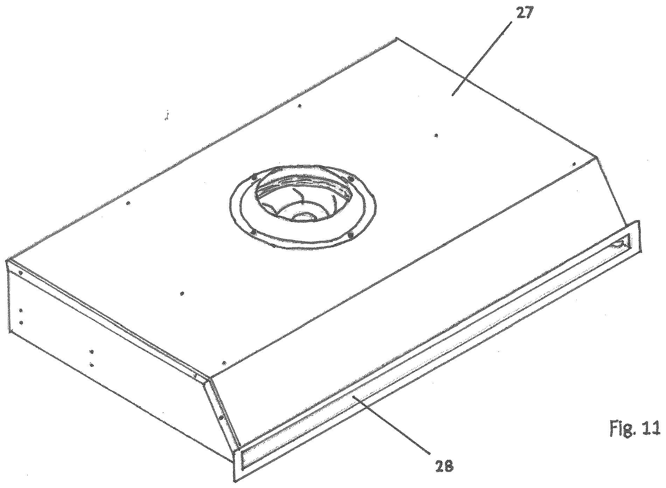

An der Anschlussstelle des Spaltraums 22, die am anderen Ende 25 verschlossen ist, kann beispielsweise ein wie in Fig. 11 gezeigter Ventilator 27 angesetzt werden, so dass über dessen Austrittsschlitz 28 der Spaltraum 22 zwangsbeströmt wird.

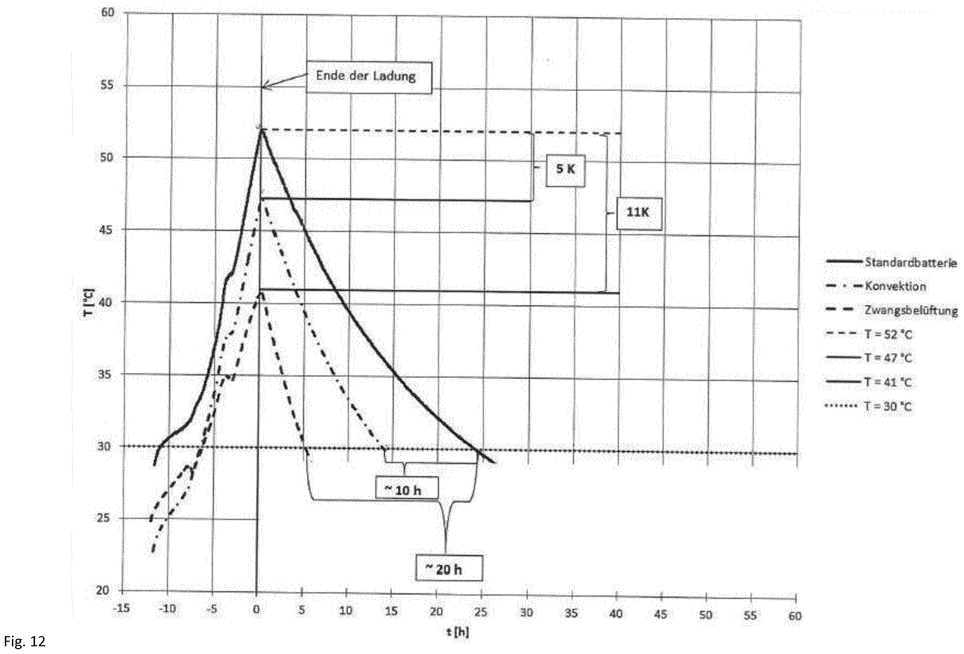

Figur 12 zeigt ein weiteres Diagramm über das Abkühlverhalten einer erfindungsgemäßen Traktionsbatterie, wobei in diesem Diagramm eine Standardbatterie, eine erfindungsgemäße Traktionsbatterie mit Konvektion und eine erfindungsgemäße Traktionsbatterie mit Zwangsbelüftung einander gegenübergestellt sind.

Wie sich aus dem Diagramm nach Figur 12 ergibt, benötigt eine Standardtraktionsbatterie, die sich infolge eines vorangegangenen Aufladevorgangs auf zum Beispiel 52°C aufgeheizt hat, eine bestimmte Abkühlzeit, um auf eine Anwendungstemperatur von ca. 30°C abzukühlen. Dem Diagramm nach Figur 12 ist zu entnehmen, dass die Abkühlzeit bei einer solchen Standardtraktionsbatterie knapp 25 Stunden beträgt.

Eine erfindungsgemäße Traktionsbatterie 1, die mittels Konvektion belüftet wird, heizt im Zuge eines Ladevorgangs nicht so weit auf und erreicht beispielsweise nur eine Temperatur von 47°C, liegt mithin 5°C unter der Temperatur einer Standardtraktionsbatterie, die diese mit Beendigung des Ladevorgangs erreicht. Zur Abkühlung der Batterie auf eine Anwendungstemperatur von ca. 30°C wird eine Zeit von ca. 15 Stunden benötigt, so dass eine konvektionsbelüftete Traktionsbatterie nach der Erfindung ca. 10 Stunden schneller als eine Standardtraktionsbatterie abkühlt.

Eine erfindungsgemäße Traktionsbatterie 1, die zwangsbelüftet ist, erreicht zum Ende eines Ladevorgangs nur ca. 41 °C, womit sie ca. 11°C kühler als eine Standardtraktionsbatterie nach Beendigung des Ladevorgangs ist. Die Abkühlzeit zur Erreichung einer Anwendungstemperatur von ca. 30°C beträgt nur ca. 5 Stunden, so dass sich im Vergleich zur Traktionsbatterie mit Konvektionsbelüftung eine Verringerung von 10 Stunden und im Vergleich zu einer Standardtraktionsbatterie eine Verkürzung um 20 Stunden ergibt.

Wie dem Diagramm nach Figur 12 im Ergebnis insgesamt zu entnehmen ist, wird infolge der erfindungsgemäßen Ausgestaltung im Vergleich zu einer Standardtraktionsbatterie nicht nur eine Verkürzung der Abkühlzeit erreicht. Vielmehr ist darüber hinaus auch noch erreicht, dass am Ende eines Ladevorgangs die Temperatur der Traktionsbatterie geringer ausfällt. So hat eine Standardtraktionsbatterie mit Beendigung der Ladung eine Temperatur im dargestellten Ausführungsbeispiel von ca. 52°C, wohingegen eine Traktionsbatterie gemäß der Erfindung mit Konvektionsbelüftung eine Temperatur von nur 47°C aufweist und eine Traktionsbatterie nach der Erfindung mit Zwangsbelüftung sogar nur eine Temperatur von 41°C aufweist.

Typischerweise erwärmt sich eine Traktionsbatterie zum Ende eines bestimmungsgemäßen Einsatzzyklus. Die Batterie wird mithin bereits unter Temperatur stehend in den Ladevorgang gehen. Alsdann beginnt der Ladevorgang, der beispielsweise fünf Stunden dauert. Der Prozesszyklus, das heißt die Wiedereinsetzbarkeit der Batterie ergibt sich mithin aus Ladezeit einerseits und Abkühlzeit andererseits. Bei einer Ladezeit von zum Beispiel 5 Stunden ergibt sich mithin bei einer Standardtraktionsbatterie eine Ausfallzeit von ca. 30 Stunden, nämlich 5 Stunden Ladezeit und 25 Stunden Abkühlzeit. Eine Traktionsbatterie der erfindungsgemäßen Art mit Zwangsbelüftung hat hingegen nur eine Ausfallzeit von 10 Stunden, nämlich 5 Stunden für die Ladung und 5 Stunden für die Abkühlung. Dies stellt eine Verringerung um 66 % im Vergleich zur Standardbatterie dar.

### Bezugszeichen

- 1: Traktionsbatterie
- 2: Batteriezelle
- 3: Höhenrichtung
- 4: Zellendeckel
- 5: Plus-Pol
- 6: Minus-Pol
- 7: Batterietrog
- 8: Seitenwand
- 9: Ausnehmung
- 10: Ausgleichsspalt
- 11: Zwischenwand
- 12: Seitenwand
- 13: Batteriekasten
- 14: Seitenwand
- 15: Seitenwand
- 16: Bodenteil
- 17: Spaltraum
- 18: Abstandshalter
- 19: Abschlusskante
- 20: Abschlusskante
- 21: Spalt
- 22: Spaltraum
- 23: Bodenplatte
- 24: Strömungsverbindung
- 25: Spaltende
- 26: Spaltanfang
- 27: Ventilator
- 28: Austrittschlitz
- R: Reihe
- S: Spalte

## Patentansprüche

1. Traktionsbatterie, mit mehreren miteinander verschalteten Batteriezellen (2), die jeweils in einem Zellengehäuse einander abwechselnd angeordnete positive und negative Elektrodenplatten aufweisen, und mit mehreren Batterietrögen (7), die jeweils der Aufnahme einer Mehrzahl von Batteriezellen (2) dienen, wobei ein jeder Batterietrog (7) elektrolytfest und -dicht ausgebildet ist, sowie mit einem die Batterietröge (7) aufnehmenden Batteriekasten (13), wobei benachbarte Batterietröge (7) unter Belassung eines Spaltraums (17) beabstandet zueinander angeordnet sind, **dadurch gekennzeichnet, dass** ein Batterietrog (7) als U-Profil ausgebildet ist, wobei das U-Profil stirnseitig verschlossen ist, wobei der stirnseitige Verschluss durch gegenüberliegende Seitenwände des Batteriekastens gebildet ist.

2. Traktionsbatterie nach Anspruch 1, **dadurch gekennzeichnet, dass** ein der in Längsrichtung eines Batterietroges (7) verlaufenden Seitenwand (15) des Batteriekastens (13) nebengeordneter Batterietrog (7) unter Belassung eines Spaltraums (17) beabstandet zur Seitenwand (15) des Batteriekastens (13) angeordnet ist.

3. Traktionsbatterie nach Anspruch 1 oder 2, **dadurch gekennzeichnet, dass** im Spaltraum (17) zwischen zwei benachbarten Batterietrögen (7) und/oder im Spaltraum (17) zwischen einem Batterietrog (7) und einer benachbarten Seitenwand (15) des Batteriekastens (13) ein Abstandshalter (18) angeordnet ist.

4. Traktionsbatterie nach einem der vorhergehenden Ansprüche, **dadurch gekennzeichnet, dass** die untere Abschlusskante (20) der vom Batteriekasten (13) aufgenommenen Batterietröge (7) in Höhenrichtung (3) oberhalb der unteren Abschlusskante (19) des Batteriekastens (13) angeordnet ist.

5. Traktionsbatterie nach einem der vorhergehenden Ansprüche, **dadurch gekennzeichnet, dass** diese ein Zwangsströmungssystem für ein Kühlmedium umfasst.

6. Traktionsbatterie nach Anspruch 5, **dadurch gekennzeichnet, dass** diese mit einem Mittel zur Erzeugung einer Zwangsströmung eines Kühlmediums verbindbar ist.

7. Traktionsbatterie nach Anspruch 5 oder 6, **dadurch gekennzeichnet, dass** das Zwangsströmungssystem Mittel zur Erzeugung einer Zwangsströmung umfasst.

8. Traktionsbatterie nach einem der vorhergehenden Ansprüche 5 bis 7, **dadurch gekennzeichnet, dass** unterschiedliche Spalträume strömungstechnisch miteinander verbunden sind.

9. Traktionsbatterie nach einem der vorhergehenden Ansprüche, **dadurch gekennzeichnet, dass** diese einen unter den Batteriezellen verlaufenden Bodenspaltraum aufweist.

10. Traktionsbatterie nach einem der vorhergehenden Ansprüche, **dadurch gekennzeichnet, dass** mehrere Spalträume über einen Verteilerspaltraum mit Kühlmedium gespeist werden.

11. Traktionsbatterie nach Anspruch 10, **dadurch gekennzeichnet, dass** der Verteilerspaltraum in Strömungsrichtung unterschiedliche Strömungsquerschnitte aufweist.

12. Traktionsbatterie nach einem der vorhergehenden Ansprüche 5 bis 11, **dadurch gekennzeichnet, dass** wenigstens ein Spaltraum einen Anschluss für eine Kühlmediumzuleitung aufweist.

13. Traktionsbatterie nach Anspruch 12, **dadurch gekennzeichnet, dass** der Anschluss schlitzförmig ausgebildet ist.

14. Traktionsbatterie nach einem der vorhergehenden Ansprüche 5 bis 13, **dadurch gekennzeichnet, dass** das Kühlmedium Luft ist.

## Claims

1. A traction battery comprising several battery cells (2) which are interconnected with each other and which respectively comprise alternating positive and negative electrode plates arranged in a cell housing, and comprising several battery trays (7) which each serve for receiving a plurality of battery cells (2), wherein each battery tray (7) is configured to be electrolyte resistant and tight, as well as comprising a battery box (13) receiving the battery trays (7), wherein adjacent battery trays (7) are spaced from each other while leaving a gap space (17), **characterized in that** a battery tray (7) is formed like a U-profile, wherein the U-profile is closed on the front side, wherein the closure on the front side is formed by opposite side walls of the battery box.

2. A traction battery according to claim 1, **characterized in that** a battery tray (7) arranged next to the side wall (15) of the battery box (13), which side wall (15) extends in the longitudinal direction of a battery tray (7), is spaced apart from the side wall (15) of the battery box (13) while leaving a gap space (17).

3. A traction battery according to claim 1 or 2, **characterized in that** a spacer (18) is arranged in the gap space (17) between two adjacent battery trays (7) and/or in the gap space (17) between a battery tray (7) and an adjacent side wall (15) of the battery box (13).

4. A traction battery according to one of the preceding claims, **characterized in that** the lower closing edge (20) of the battery trays (7) received by the battery box (13) is placed above the lower closing edge (19) of the battery box (13) in the direction of height (3).

5. A traction battery according to one of the preceding claims, **characterized in that** this one comprises a forced flow system for a cooling medium.

6. A traction battery according to claim 5, **characterized in that** this one can be connected to a means for generating a forced flow of a cooling medium.

7. A traction battery according to claim 5 or 6, **characterized in that** the forced flow system comprises means for generating a forced flow.

8. A traction battery according to one of the preceding claims 5 through 7, **characterized in that** different gap spaces are connected in a fluidic manner to each other.

9. A traction battery according to one of the preceding claims, **characterized in that** this one comprises a bottom gap space that extends beneath the battery cells.

10. A traction battery according to one of the preceding claims, **characterized in that** several gap spaces are fed with cooling medium via a distributor gap space.

11. A traction battery according to claim 10, **characterized in that** the distributor gap space comprises different flow areas in the direction of flow.

12. A traction battery according to one of the preceding claims 5 through 11, **characterized in that** at least one gap space comprises a connection for a cooling medium supply line.

13. A traction battery according to claim 12, **characterized in that** the connection is designed in the form of a slit.

14. A traction battery according to one of the preceding claims 5 through 13, **characterized in that** the cooling medium is air.

## Revendications

1. Batterie de traction comprenant plusieurs cellules de batterie (2) connectées l'une à l'autre, qui comprennent chacune des plaques d'électrode positives et négatives disposées de manière alternée dans un boîtier de cellules, et comprenant plusieurs coffres de batterie (7), qui servent chacun à recevoir une pluralité de cellules de batterie (2), chaque coffre de batterie (7) étant résistant et étanche à l'électrolyte, ainsi que comprenant un boîtier de batterie (13) recevant les coffres de batterie (7), des coffres de batterie (7) adjacents étant espacés l'un de l'autre en laissant un espace en forme de fente (17), **caractérisé en ce qu'**un coffre de batterie (7) est configuré comme un profilé en U, le profilé en U étant fermé sur la face frontale, la fermeture sur la face frontale étant formée par des parois latérales opposées du boîtier de batterie.

2. Batterie de traction selon la revendication 1, **caractérisée en ce qu'**un coffre de batterie (7) disposé à côté de la paroi latérale (15) du boîtier de batterie (13), la paroi latérale (15) s'étendant dans la direction longitudinale d'un coffre de batterie (7), est espacé de la paroi latérale (15) du boîtier de batterie (13) en laissant un espace en forme de fente (17).

3. Batterie de traction selon la revendication 1 ou la revendication 2, **caractérisée en ce qu'**un écarteur (18) est disposé dans l'espace en forme de fente (17) entre deux coffres de batterie (7) adjacents et/ou dans l'espace en forme de fente (17) entre un coffre de batterie (7) et une paroi latérale (15) adjacente du boîtier de batterie (13).

4. Batterie de traction selon l'une des revendications précédentes, **caractérisée en ce que** le bord terminal (20) inférieur des coffres de batterie (7) reçus par le boîtier de batterie (13) est disposé au-dessus du bord terminal (19) inférieur du boîtier de batterie (13) dans la direction de la hauteur (3).

5. Batterie de traction selon l'une des revendications précédentes, **caractérisée en ce que** celle-ci comprend un système de courant forcé d'un agent réfrigérant.

6. Batterie de traction selon la revendication 5, **caractérisée en ce que** celle-ci peut être reliée à un moyen destiné à générer un courant forcé d'un agent réfrigérant.

7. Batterie de traction selon la revendication 5 ou la revendication 6, **caractérisée en ce que** le système de courant forcé comprend des moyens pour générer un courant forcé.

8. Batterie de traction selon l'une des revendications précédentes 5 à 7, **caractérisée en ce que** des espaces en forme de fente différents sont reliés l'un à l'autre de manière fluidique.

9. Batterie de traction selon l'une des revendications précédentes, **caractérisée en ce que** celle-ci comprend un espace inférieur en forme de fente, qui s'étend au-dessous des cellules de batterie.

10. Batterie de traction selon l'une des revendications précédentes, **caractérisée en ce que** plusieurs espaces en forme de fente sont alimentés en agent réfrigérant via un espace de distribution en forme de fente.

11. Batterie de traction selon la revendication 10, **caractérisée en ce que** l'espace de distribution en forme de fente comprend des sections transversales d'écoulement différentes dans la direction d'écoulement.

12. Batterie de traction selon l'une des revendications précédentes 5 à 11, **caractérisée en ce qu'**au moins un espace en forme de fente comprend un raccord pour une conduite d'alimentation en agent réfrigérant.

13. Batterie de traction selon la revendication 12, **caractérisée en ce que** le raccord est configuré en forme d'une fente.

14. Batterie de traction selon l'une des revendications précédentes 5 à 13, **caractérisée en ce que** l'agent réfrigérant est l'air.
